# EUROPÄISCHE PATENTSCHRIFT

(11) **EP 3 254 552 B1**
(45) Veröffentlichungstag und Bekanntmachung des Hinweises auf die Patenterteilung: **17.10.2018**
(21) Anmeldenummer: 17401057.9
(22) Anmeldetag: 23.05.2017
(51) Int. Cl.: A01C 5/06, A01C 7/20

(54) **SÄSCHAR**
SEED DRILL COULTER
SOC DE SEMOIR

(30) Priorität: 09.06.2016 DE 102016110619
(43) Veröffentlichungstag der Anmeldung: 13.12.2017
(73) Patentinhaber: Amazonen-Werke H. Dreyer GmbH & Co. KG, 49205 Hasbergen (DE)
(72) Erfinder: Hamann, Malte, 26131 Oldenburg (DE); Tanke, Christian, 01723 Kesselsdorf (DE); Hüer, Berthold, 49740 Haselünne (DE)

(56) Entgegenhaltungen:
- DE-A1- 4 419 964

## Beschreibung

Die Erfindung betrifft ein Säschar gemäß des Oberbegriffes des Patentanspruches 1.

Ein derartiges Säschar ist durch die DE44 19 964 A1 bekannt.

Ein weiteres Säschar ist in EP 1 338 187 B1 beschrieben. Bei diesem Säschar ist das Endstück der Saatgutleitung in abnehmbarer Weise an dem Scharträger angeordnet. Das Endstück ist so zwischen den beiden Scheiben angeordnet, dass es nach dem Lösen des oberen Festsetzelementes um das untere Festsetzelement nach hinten schwenken kann. In dieser Position kann das Endstück zur Reinigung und Wartung des Schares abgenommen werden. Anschließend kann das Endstück wieder am Scharträger angeordnet werden. An dem unteren Ende des Endstückes sind Hakenelemente angeordnet, welche hinter Bolzen einhakend eingesetzt werden müssen. Anschließend wird durch nach vorn Schwenken des Endstückes das Endstück der Saatleitung soweit an den Scharträger des Schares herangeschwenkt, dass die oberen Bohrungen der Halterung zur Deckung gebracht werden, damit ein Sicherungsstift hindurchgesteckt werden kann. Aufgrund der Verschwenkmöglichkeit muss ein ausreichendes Spiel zumindest im Bereich des unteren Festsetzelementes vorhanden sein.

Für die bekannte Schar ist nur eine bestimmte Ausgestaltung des Endstückes vorgesehen. Eine Anpassung der Ausgestaltung des Endstückes an verschiedene Korngrößen des Saatgutes ist nicht vorgesehen.

Der Erfindung liegt die Aufgabe zu Grunde, eine einfache Anpassungsmöglichkeit des Endstückes zur optimierten Saatgutablage durch das Schar zu schaffen.

Diese Aufgabe wird erfindungsgemäß durch die kennzeichnenden Merkmale des Anspruches 1 gelöst.

Infolge dieser Maßnahme sind zumindest zwei verschiedenartig ausgebildete Endstücke für die Zuleitung vorgesehen, die in gegeneinander austauschbarer Weise an dem Scharträger des Säschares zu befestigen sind. Somit kann jeweils nach Korngröße des Saatgutes die für optimierte bzw. optimale Variante des Endstückes für die Zuleitung gewählt werden, so dass eine optimierte Ablagequalität der Saatgutbehälter sowohl bei Saatgütern mit kleineren Korndurchmessern wie auch mit größeren Korndurchmessern in der Säfurche gewährleistet ist. Eine derartig ausgestaltete Zuführleitung ist besonders für die Ausbringung von Saatkörner mit größeren Korndurchmessern geeeignet.

In bevorzugter Weise ist vorgesehen, dass die gegeneinander austauschbaren Endstücke der Verteilerleitungen bei so genannten Doppelscheibenscharen zum Einsatz kommen. Hierbei sind dann an dem Scharträger zwei schräg zur Fahrtrichtung und entgegengesetzt V-förmig zueinander angestellte Scheiben vorgesehen, zwischen denen das Endstück zumindest einer Saatgut- und/oder Düngerzuleitung ausmündet.

Zur Anordnung des Endstückes beim Doppelscheibenschar ist vorgesehen, dass die als Saatgut- und/oder Düngerzuleitung ausgebildete Zuführleitung pneumatisch beaufschlagt ist, dass die Zuführleitung für Saatgut und/oder Dünger, deren Mündungsabschnitt in dem unteren Bereich zwischen zwei V-förmig zueinander angestellte und drehbar an einem Scharträger angeordnete Scheiben ausmündet, an dem Scharträger angeordnet ist.

ist Das Endstück kann dann noch so weitergebildet sein, dass die Zweigleitung mit einem zumindest annähernden 90° Krümmungsbogen an die Öffnung in der Zuführleitung angeschlossen ist und die Mündung der Zweigleitung nach unten weist.

Für die Ausbringung von Saatkörner mit kleineren Korndurchmessern ist vorgesehen, dass die Zuführleitung ein zweites austauschbares Endstück, dessen Endbereich zumindest annähernd senkrecht nach unten weist, aufweist.

Für weitere Einsatzfälle kann noch vorgesehen sein, dass die Zuführleitung ein drittes austauschbares Endstück, welches zumindest in dem oberen hinteren Viertel der Scheiben ein erstes Kreisbogensegment, dessen konvexer Bereich nach hinten weist, aufweist, wobei sich an dieses erste Kreisbogensegment des Endstückes der Zuführleitung über ein geradlinig und schräg nach vorn-unten verlaufendes Zwischenstück ein zweites, entgegengesetzt zur Krümmung des ersten Kreisbogensegmentes verlaufendes Kreisbogensegment, dessen konvexer Bereich in der unteren Hälfte der Scheiben nach vorn weist, des Endstückes der Zuführleitung anschließt.

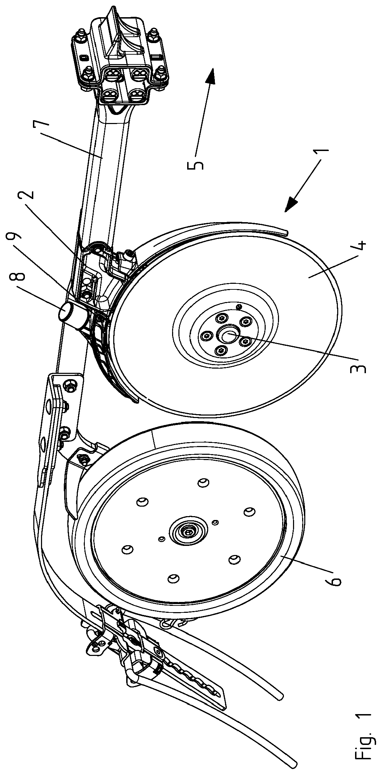

Weitere Einzelheiten der Erfindung sind der Beispielsbeschreibung und den Zeichnungen zu entnehmen. Die Zeichnungen zeigen
- Fig.1: ein erfindungsgemäßes Säschar in perspektivischer Darstellung,
- Fig.2: das Doppelscheibenschar des Säschares nach Fig.1 mit abgenommener rechter Scharscheibe des Doppelscheibenschares und mit in Betriebsstellung montiertem erstem Endstück der Zuleitung für Saatkörner mit größerem Korndurchmesser, in gleicher Darstellungsweise, jedoch in größerem Maßstab,
- Fig.3: das Doppelscheibenschar nach Fig.2 mit abgenommenen Endstück der Zuleitung in der Darstellungsweise nach Fig.2,
- Fig.4: das Endstück nach den Fig. 2 und 3 im Schnitt IV - IV,
- Fig.5: das Doppelscheibenschar nach Fig.1 mit abgenommener rechter Scharscheibe des Doppelscheibenschares und mit in Betriebsstellung montiertem zweitem Endstück der Zuleitung für Saatkörner mit kleinerem Korndurchmesser, in der Darstellungsweise, nach Fig.2,
- Fig.6: das Doppelscheibenschar nach Fig.5 mit abgenommenen Endstück der Zuleitung in der Darstellungsweise nach Fig.5,
- Fig.7: das Endstück nach den Fig. 5 und 6 im Schnitt VII - VII,

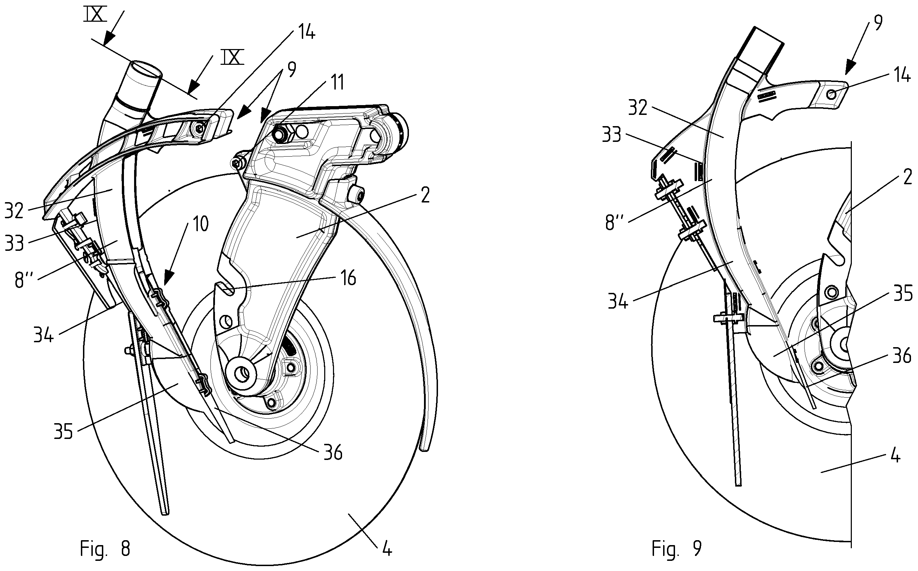

- Fig.8: ein drittes Endstück für auszubringende Saatkörner mit anderen Korndurchmesser oder anderen Ausbring- oder Fördereigenschaften in abgenommener Darstellung und der Darstellungsweise gemäß Fig.3 und
- Fig.9: das Endstück gemäß Fig.8 im Schnitt IX - IX.

Das Säschar 1 ist als Doppelscheibenschar ausgestaltet und weist einen Scharträger 2, an dem mittels entsprechender Lagerungen 3 zwei Scharscheiben 4 frei drehbar und schräg zur Fahrtrichtung 5 und entgegengesetzt V-förmig zueinander angestellt angeordnet sind. Hinter den beiden Scheiben 4 ist beabstandet zu den Scheiben 4 eine Tiefenführungs- und Saatgutandruckrolle 6 angeordnet. Die Anordnung dieser Rolle 6 ist optional, das Säschar 1 kann auch ohne diese Rolle 6 eingesetzt werden. Das Säschar 1 mit dem Scharträger 2 sind über Scharhaltearme 7 an nicht dargestellten, quer zur Fahrtrichtung 5 verlaufenden Querbalken einer Sämaschine in bekannter Weise angeordnet. Dem Säschar 1 ist das Endstück 8 zumindest einer Saatgut- und/oder Düngerzuleitung zugeordnet. Die als Saatgut- und/oder Düngerzuleitung ausgebildete Zuführleitung ist pneumatisch beaufschlagt. Die Zuführleitung für Saatgut und/oder Dünger, deren Mündungsabschnitt 90 in dem unteren Bereich zwischen zwei V-förmig zueinander angestellte und drehbar an einem Scharträger 2 angeordnete Scheiben 4 ausmündet, an dem Scharträger angeordnet ist.
Das Endstück 8 der Saatgut- und/oder Düngerzuleitung mündet zwischen den entgegengesetzt V-förmig zueinander angestellte Scheiben 4 des Doppelscheibenschares 1 aus. Dieses Endstück 8 ist über die beiden beschriebenen Verbindungselementen 9 und 10 an dem Scharträger 2 in abnehmbar Weise angeordnet.

Der Scharträger 2 weist einen oberen Befestigungsbereich 11 für das Endstück 8 und einen auf der Rückseite unterhalb des Befestigungsbereiches 11 nach unten in Richtung der Lagerung 3 aufrecht verlaufenden Bereich 12 mit dem unteren Befestigungsbereich 13 auf.

In dem oberen Bereich des Endstückes 8 ist an dem Endstück 8 im Bereich des Befestigungsbereiches 11 des oberen Verbindungselementes 9 das Festsetzelement 14 angeordnet. Über dieses Festsetzelement 14 des Verbindungselementes 9 wird das Endstück 8 im oberen Bereich mit dem Scharträger 2 formschlüssig verbunden. Hierzu weist das Endstück 8 auf der dem Scharträger 2 benachbarten Bereich zwei beabstandet zueinander angeordnete Laschenanordnungen 15 auf, die als Verbindungselemente 9 zu dem Scharträger 2 zur Montage des Endstückes 8 an dem Scharträger 2 ausgestaltet sind.

Auf der Rückseite des aufrecht verlaufenden Bereiches 12 des Scharträgers 2 ist unterhalb des oberen Verbindungselementes 9 eine Aussparung 16, die Bestandteil des unteren Verbindungselementes 10 zur Anordnung des Endstückes 8 an dem Scharträger 2 ist. Diese Aussparung 16 ist in dem aufrecht verlaufenden Bereich 12 des Scharträgers 2 auf der dem Endstück 8 benachbarten Seite angeordnet und zu dem Endstück 8 offen ausgestaltet. Passend zu der Anordnung der Aussparung 16 in dem Scharträger 2 sind in entsprechenden Abstand und entsprechender Lage von dem oberen Verbindungselement 9 an dem Endstück 8 die Laschen 17 der Laschenanordnung 5 angeordnet. Jede Lasche 17 dieser Anordnung 15 weist zwei beabstandet zueinander angeordnete Laschen 17 auf, die den Scharträger 2 beidseitig umgreifen. Zwischen den beiden Laschen 17 der Laschenanordnung 5 ist ein in die Aussparung 16 als Steckelement 18 ausgebildetes eingreifendes Zwischenstück angeordnet. Weiterhin übergreifen die Laschen 17 die jeweilige Aussparung 16 wenn das Endstück 8 an dem Scharträger 2 montiert ist.

Somit ist in dem aufrecht verlaufenden Bereich des Scharträgers 2 auf der dem Endstück 8 benachbarten Seite die zu dem Endstück 8 offene Aussparung 16 angeordnet. Diese Aussparung 16 befindet sich nach der Montage auf Höhe des an dem Endstück 8 angebrachten Steckelementes 18 der Laschenanordnung 15, so dass das Steckelement 18 in die Aussparung 16 eingreifen kann. Das Steckelement 18 greift in die Aussparung 16 ein
Wie vorbeschrieben ist das Endstück 8 abnehmbar an dem als Scheibenträger ausgebildeten Scharträger 2 mittels der Verbindungselementes 9 und 10 angeordnet ist. Zur Anordnung an dem Scharträger 2 des Doppelscheibenschares 1 sind bei dem Ausführungsbeispiel drei verschiedenartig ausgebildete Endstücke 8,8' und 8" für die Zuleitung vorgesehen und gegeneinander in austauschbarer Weise an dem Scharträger 2anzuordnen, wie nachstehend beschrieben ist.

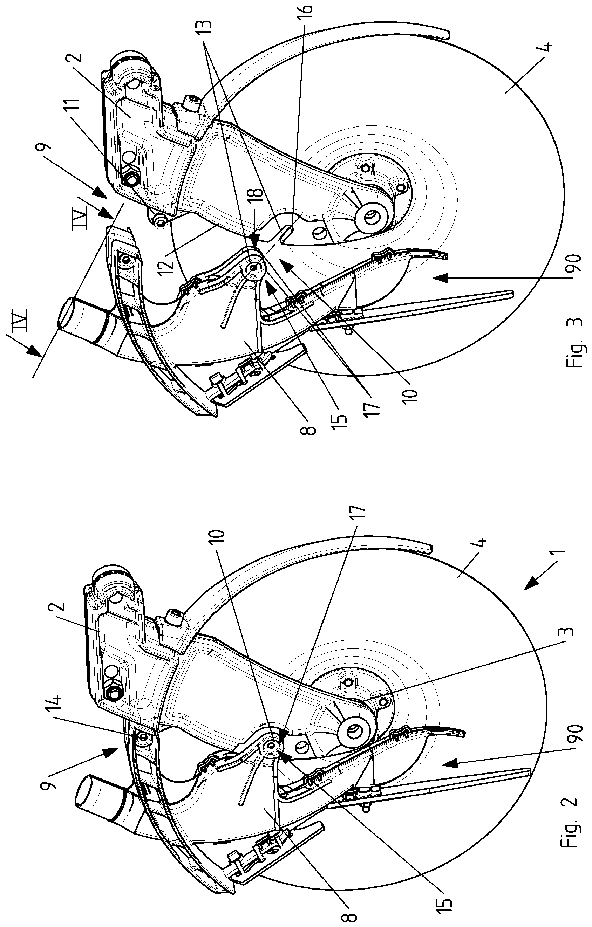

Das erste austauschbare Endstück 8 gemäß den Fig.2 - 3, weist zumindest in dem oberen hinteren Viertel der Scheiben 4 ein erstes Kreisbogensegment 19, dessen konvexer Bereich 20 nach hinten weist, auf. An dieses erste Kreisbogensegment 19 des Endstückes 8 der Zuführleitung schließt sich über ein geradlinig und schräg nach vorn-unten verlaufendes Zwischenstück 21 ein zweites, entgegengesetzt zur Krümmung des ersten Kreisbogensegmentes 19 verlaufendes Kreisbogensegment 22, dessen konvexer Bereich 23 in der unteren Hälfte der Scheiben 4 nach vorn weist, des Endstückes 8 der Zuführleitung an. Bei dem zweiten Kreisbogensegment 22 des Endstückes 8 der Zuführungsleitung ist die hintere Wand auf der konkaven Seite der Krümmung zur Schaffung einer vergrößerten Öffnung 24 des Endstückes 8 der Zuführleitung nach hinten zumindest teilweise ausgeschnitten. Die vordere Wand 25 des zweiten Kreisbogensegmentes 22 weist auf der konvexen Seite des Kreisbogensegmentes 22 in ihrem Endbereich schräg nach hinten-unten. Die vordere Wand 26 weist im mittleren Bereich des ersten Kreisbogensegmentes 19 auf der konkaven Seite der Krümmung eine Öffnung 27 mit einer sich daran anschließenden nach vorn-unten fortsetzenden Zweigleitung 28 auf. Die Zweigleitung 28 weist mit einem zumindest annähernden 90° Krümmungsbogen 29 an die Öffnung 30 in der Zuführleitung angeschlossen ist und die Mündung 30 der Zweigleitung 28 nach unten.

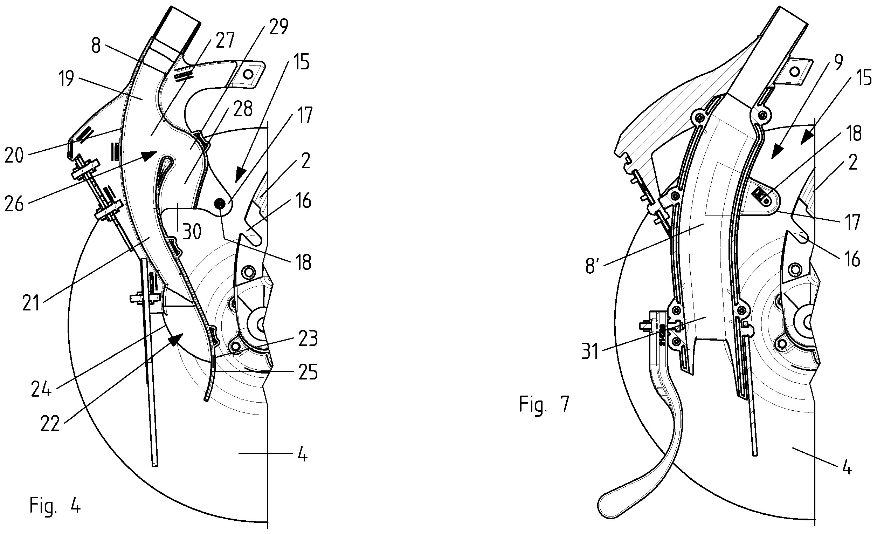

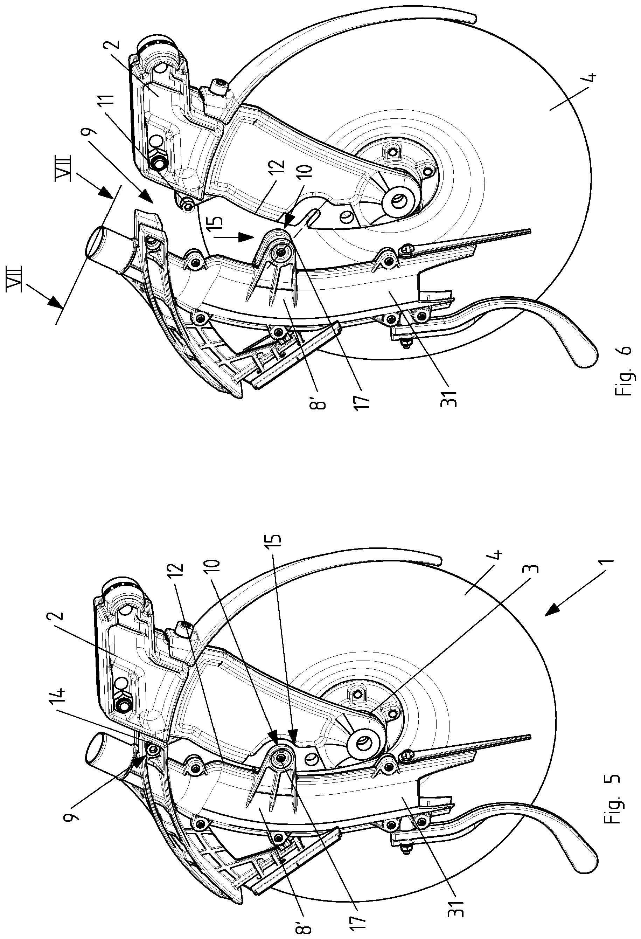

Das erste Endstück 8 der Zuführleitung nach den Fig.2 - 4 ist gegen das zweite Endstück 8' der Zuführleitung nach den Fig. 5 - 7 austauschbar. Dieses zweite austauschbare Endstück 8' weist einen Endbereich 31 auf, der zumindest annähernd senkrecht nach unten weist, aufweist.

Weiterhin ist noch für die Zuführleitung ein drittes austauschbares Endstück 8" zum Austausch gegen die anderen Endstücke 8 und 8' vorgesehen. Dieses dritte Endstück 8" weist in dem oberen hinteren Viertel der Scheiben 4 ein erstes Kreisbogensegment 32, dessen konvexer Bereich 33 nach hinten weist, auf. An dieses erste Kreisbogensegment 32 des Endstückes 8" der Zuführleitung schließt sich über ein geradlinig und schräg nach vorn-unten verlaufendes Zwischenstück 34 ein zweites, entgegengesetzt zur Krümmung des ersten Kreisbogensegmentes 32 verlaufendes Kreisbogensegment 35, dessen konvexer Bereich 36 in der unteren Hälfte der Scheiben 4 nach vorn weist, des Endstückes 8" der Zuführleitung an.

## Patentansprüche

1. Säschar mit einem Scharträger (2), an dem das Endstück (8,8',8") zumindest einer Saatgut- und/oder Düngerzuleitung ausmündend angeordnet ist, wobei das Endstück (8,8',8") abnehmbar an dem Scharträger (2) mittels zumindest eines Verbindungselementes (9,10) angeordnet ist, wobei zumindest zwei verschiedenartig ausgebildete Endstücke (8,8',8") für die Zuleitung vorgesehen und gegeneinander in austauschbarer Weise an dem Scharträger (2) anzuordnen sind, **dadurch gekennzeichnet, dass** die Zuführleitung ein erstes austauschbares Endstück (8), welches zumindest in dem oberen hinteren Viertel der Scheiben (4) ein erstes Kreisbogensegment (19), dessen konvexer Bereich nach hinten weist, aufweist, wobei sich an dieses erste Kreisbogensegment (19) des Endstückes (8) der Zuführleitung über ein geradlinig und schräg nach vorn-unten verlaufendes Zwischenstück (21) ein zweites, entgegengesetzt zur Krümmung des ersten Kreisbogensegmentes (19) verlaufendes Kreisbogensegment (22), dessen konvexer Bereich in der unteren Hälfte der Scheiben (4) nach vorn weist, des Endstückes (8) der Zuführleitung anschließt, wobei bei dem zweiten Kreisbogensegment (22) des Endstückes (8) der Führungsleitung die hintere Wand auf der konkaven Seite der Krümmung zur Schaffung einer vergrößerten Öffnung (24) des Endstückes (8) der Zuführleitung nach hinten zumindest teilweise ausgeschnitten ist, wobei die vordere Wand (25) des zweiten Kreisbogensegmentes (22) auf der konvexen Seite des Kreisbogensegmentes (22) in ihrem Endbereich schräg nach hinten-unten weist, dass die vordere Wand (26) im mittleren Bereich des ersten Kreisbogensegmentes (19) auf der konkaven Seite der Krümmung eine Öffnung (30) mit einer sich daran anschließende nach vorn-unten fortsetzenden Zweigleitung (28) aufweist.

2. Säschar nach Anspruch 1, **dadurch gekennzeichnet, dass** an dem Scharträger (2) zwei schräg zur Fahrtrichtung (5) und entgegengesetzt V-förmig zueinander angestellte Scheiben (4), zwischen denen das Endstück (8,8',8") zumindest einer Saatgut- und/oder Düngerzuleitung ausmündet, angeordnet sind.

3. Säschar nach zumindest einem der vorstehenden Ansprüche, **dadurch gekennzeichnet, dass** die als Saatgut- und/oder Düngerzuleitung ausgebildete Zuführleitung pneumatisch beaufschlagt ist, dass die Zuführleitung für Saatgut und/oder Dünger, deren Mündungsabschnitt in dem unteren Bereich zwischen zwei V-förmig zueinander angestellte und drehbar an einem Scharträger (2) angeordnete Scheiben (4) ausmündet, an dem Scharträger (2) angeordnet ist.

4. Scheibenschar nach Anspruch 4, **dadurch gekennzeichnet, dass** die Zweigleitung (28) mit einem zumindest annähernden 90° Krümmungsbogen an die Öffnung (30) in der Zuführleitung angeschlossen ist und die Mündung (30) der Zweigleitung (28) nach unten weist.

5. Säschar nach zumindest einem der vorstehenden Ansprüche 1 und/oder 2, **dadurch gekennzeichnet, dass** die Zuführleitung ein zweites austauschbares Endstück (8'), dessen Endbereich (31) zumindest annähernd senkrecht nach unten weist, aufweist.

6. Säschar nach zumindest einem der vorstehenden Ansprüche 1 und/oder 2, **dadurch gekennzeichnet, dass** die Zuführleitung ein drittes austauschbares Endstück (8"), welches zumindest in dem oberen hinteren Viertel der Scheiben (4) ein erstes Kreisbogensegment (32), dessen konvexer Bereich (33) nach hinten weist, aufweist, wobei sich an dieses erste Kreisbogensegment (32) des Endstückes (8") der Zuführleitung über ein geradlinig und schräg nach vorn-unten verlaufendes Zwischenstück (34) ein zweites, entgegengesetzt zur Krümmung des ersten Kreisbogensegmentes (32) verlaufendes Kreisbogensegment (35), dessen konvexer Bereich (36) in der unteren Hälfte der Scheiben (4) nach vorn weist, des Endstückes (8")der Zuführleitung anschließt.

## Claims

1. Sowing coulter having a coulter carrier (2), on which the end piece (8, 8', 8") of at least one seed and/or fertilizer feed line is arranged so as to open there, the end piece (8, 8', 8") being arranged removably on the coulter carrier (2) by means of at least one connecting element (9, 10), at least two end pieces (8, 8', 8") of different configuration being provided for the feed line, which end pieces (8, 8', 8") are to be arranged on the coulter carrier (2) in an exchangeable way with respect to one another, **characterized in that** the feed line has a first exchangeable end piece (8) which has a first circular arc segment (19) at least in the upper rear quarter of the discs (4), the convex region of which first circular arc segment (19) points towards the rear, the said first circular arc segment (19) of the end piece (8) of the feed line being adjoined via an intermediate piece (21) which runs rectilinearly and obliquely towards the front and bottom to a second circular arc segment (22) of the end piece (8) of the feed line, which second circular arc segment (22) runs in an opposed manner with respect to the curvature of the first circular arc segment (19), and the convex region of which second circular arc segment (22) points towards the front in the lower half of the discs (4), the rear wall, in the case of the second circular arc segment (22) of the end piece (8) of the guide line, being cut out at least partially on the concave side of the curvature in order to provide an enlarged opening (24) of the end piece (8) of the feed line towards the rear, the front wall (25) of the second circular arc segment (22) pointing obliquely towards the rear and bottom in its end region on the convex side of the circular arc segment (22), and **in that**, in the middle region of the first circular arc segment (19) on the concave side of the curvature, the front wall (26) has an opening (30) with an adjoining branch line (28) which continues towards the front and bottom.

2. Sowing coulter according to Claim 1, **characterized in that** two discs (4) which are set obliquely with respect to the driving direction (5) and in an opposed V-shaped manner with respect to one another, and between which the end piece (8, 8', 8") of at least one seed and/or fertilizer feed line opens, are arranged on the coulter carrier (2).

3. Sowing coulter according to at least one of the preceding claims, **characterized in that** the feed line which is configured as a seed and/or fertilizer feed line is loaded pneumatically, and **in that** the feed line for seed and/or fertilizer, the opening section of which feed lines opens in the lower region between two discs (4) which are set in a V-shaped manner with respect to one another and are arranged rotatably on a coulter carrier (2), is arranged on the coulter carrier (2) .

4. Sowing coulter according to Claim 4, **characterized in that** the branch line (28) is connected by way of an at least approximate 90° curvature arc to the opening (30) in the feed line, and the opening (30) of the branch line (28) points downwards.

5. Sowing coulter according to at least one of the preceding Claims 1 and/or 2, **characterized in that** the feed line has a second exchangeable end piece (8'), the end region (31) of which points at least approximately perpendicularly downwards.

6. Sowing coulter according to at least one the preceding Claims 1 and/or 2, **characterized in that** the feed line has a third exchangeable end piece (8") which, at least in the upper rear quarter of the discs (4), has a first circular arc segment (32), the convex region (33) of which points rearwards, the said first circular arc segment (32) of the end piece (8") of the feed line being adjoined via an intermediate piece (34) which runs rectilinearly and obliquely towards the front and bottom to a second circular arc segment (35) of the end piece (8") of the feed line, which second circular arc segment (35) runs in an opposed manner with respect to the curvature of the first circular arc segment (32), and the convex region (36) of which second circular arc segment (35) points towards the front in the lower half of the discs (4).

## Revendications

1. Soc de semoir avec un support de soc (2), sur lequel est disposée en y débouchant la pièce d'extrémité (8, 8', 8") d'au moins une conduite d'alimentation de semences et/ou d'engrais, dans lequel la pièce d'extrémité (8, 8', 8") est disposée de façon amovible sur le support de soc (2) au moyen d'au moins un élément d'assemblage (9, 10), dans lequel il est prévu au moins deux pièces d'extrémité de forme différente (8, 8', 8") pour l'alimentation et elles doivent être disposées sur le support de soc (2) de façon échangeable l'une contre l'autre, **caractérisé en ce que** la conduite d'arrivée présente une première pièce d'extrémité échangeable (8), qui présente au moins dans le quart supérieur arrière des disques (4) un premier segment d'arc de cercle (19), dont la région convexe est tournée vers l'arrière, dans lequel un deuxième segment d'arc de cercle (22) s'étendant à l'opposé de la courbure du premier segment d'arc de cercle (19) et dont la région convexe dans la moitié inférieure des disques (4) est tournée vers l'avant, de la pièce d'extrémité (8) de la conduite d'alimentation se raccorde à ce premier segment d'arc de cercle (19) de la pièce d'extrémité (8) de la conduite d'alimentation par le biais d'une pièce intermédiaire (21) s'étendant en ligne droite et en oblique vers l'avant et vers le bas, dans lequel dans le deuxième segment d'arc de cercle (22) de la pièce d'extrémité (8) de la conduite de guidage la paroi arrière est découpée au moins en partie vers l'arrière sur le côté concave de la courbure pour créer une ouverture agrandie (24) de la pièce d'extrémité (8) de la conduite d'arrivée, dans lequel la paroi avant (25) du deuxième segment d'arc de cercle (22) est tournée en oblique vers l'arrière et vers le bas dans sa région d'extrémité sur le côté convexe du segment d'arc de cercle (22), **en ce que** la paroi avant (26) présente dans la région médiane du premier segment d'arc de cercle (19) sur le côté concave de la courbure une ouverture (30) avec une conduite de dérivation (28) s'y raccordant et se prolongeant vers l'avant et vers le bas.

2. Soc de semoir selon la revendication 1, **caractérisé en ce que** deux disques (4) disposés en oblique par rapport à la direction de marche (5) et rapprochés l'un de l'autre en opposition pour former un V, entre lesquels débouche la pièce d'extrémité (8, 8', 8") d'au moins une conduite d'alimentation de semences et/ou d'engrais, sont disposés sur le support de soc (2) .

3. Soc de semoir selon au moins une des revendications précédentes, **caractérisé en ce que** la conduite d'arrivée réalisée sous forme de conduite d'alimentation de semences et/ou d'engrais est activée de façon pneumatique, **en ce que** la conduite d'arrivée pour les semences et/ou l'engrais, dont l'embouchure débouche dans la région inférieure entre deux disques (4) placés en forme de V l'un par rapport à l'autre et disposés de façon rotative sur un support de soc (2), est disposée sur le support de soc (2).

4. Soc de semoir selon la revendication 4, **caractérisé en ce que** la conduite de dérivation (28) est raccordée avec un coude de courbure d'au moins approximativement 90° à l'ouverture (30) dans la conduite d'arrivée et l'embouchure (30) de la conduite de dérivation (8) est tournée vers le bas.

5. Soc de semoir selon au moins une des revendications précédentes 1 et/ou 2, **caractérisé en ce que** la conduite d'arrivée présente une deuxième pièce d'extrémité échangeable (8'), dont la région d'extrémité (31) est tournée au moins approximativement verticalement vers le bas.

6. Soc de semoir selon au moins une des revendications précédentes 1 et/ou 2, **caractérisé en ce que** la conduite d'arrivée présente une troisième pièce d'extrémité échangeable (8"), qui présente au moins dans le quart supérieur arrière des disques (4) un premier segment d'arc de cercle (32), dont la région convexe (33) est tournée vers l'arrière, dans lequel un deuxième segment d'arc de cercle (35) de la pièce d'extrémité (8") de la conduite d'arrivée, s'étendant à l'opposé de la courbure du premier segment d'arc de cercle (32), se raccorde à ce premier segment d'arc de cercle (32) de la pièce d'extrémité (8") de la conduite d'arrivée par le biais d'une pièce intermédiaire (34) s'étendant en ligne droite et en oblique vers l'avant et vers le bas et dont la région convexe (36) dans la moitié inférieure des disques (4) est tournée vers l'avant.
